# EUROPEAN PATENT APPLICATION

(11) **EP 4 310 580 A1**
(43) Date of publication of application: **24.01.2024**
(21) Application number: 22770963.1
(22) Date of filing: 14.02.2022
(51) Int. Cl.: G02B 27/02, G02B 5/18, G02B 5/32, H04N 5/64

(54) **DISPLAY DEVICE**

(30) Priority: 19.03.2021 JP 2021045853
(71) Applicant: Sony Group Corporation, Tokyo 108-0075 (JP)
(72) Inventor: OHKI, Kenji, Tokyo 108-0075 (JP); TAKADA, Masahiro, Tokyo 108-0075 (JP); ABE, Kuniya, Tokyo 108-0075 (JP)
(74) Representative: D Young & Co LLP
(86) International application number: PCT/JP2022/005603
(87) International publication number: WO 2022/196204

(57) **Abstract**

To provide a display device capable of further improving reliability of the display device with respect to manufacturing variations, wavelength variations of light sources, and active variations (variations due to external factors).

There is provided a display device including at least a light source, a first hologram, and a second hologram, in which the first hologram compensates for dispersion of light emitted from the light source and diffracts and emits the light, the second hologram diffracts the light diffracted with compensated dispersion, and emits the light in a direction of a pupil of a user, and the first hologram has an intensity distribution of different diffraction efficiency with respect to a wavelength of the light emitted from the light source depending on a position in a plane of the first hologram.

## Description

### TECHNICAL FIELD

The present technology relates to a display device.

### BACKGROUND ART

In recent years, attention has been focused on, for example, a technology for superimposing and displaying an image on an external scene such as a real landscape. The technology is also called augmented reality (AR) technology. One of products using this technology is a head mounted display. The head mounted display is used by being worn on the head of a user. In a video (image) display method using the head mounted display, for example, when light from the head mounted display reaches the user's eyes in addition to light from an outside world, the user recognizes a video of the light from the display as if the image were superimposed on an image of the outside world.

For example, Patent Document 1 proposes a technology related to what is called a head-up display device that displays a front visual field and display contents from a display device in a superimposed manner via a diffraction grating having optical transparency.

Furthermore, for example, Patent Document 2 proposes a technology related to a holographic display that enables observation of a good image in which an edge of a virtual image is inconspicuous.

### CITATION LIST

### PATENT DOCUMENT

Patent Document 1: Japanese Patent Application Laid-Open No. 1-306814
Patent Document 2: Japanese Patent Application Laid-Open No. 6-202037

### SUMMARY OF THE INVENTION

### PROBLEMS TO BE SOLVED BY THE INVENTION

However, in the techniques proposed in Patent Documents 1 and 2, there is a possibility that reliability of the display device cannot be further improved with respect to manufacturing variations, wavelength variations of light sources, and active variations (variations due to external factors).

Therefore, the present technology has been made in view of such a situation, and a main object thereof is to provide a display device capable of further improving reliability of the display device with respect to manufacturing variations, wavelength variations of light sources, and active variations (variations due to external factors).

### SOLUTIONS TO PROBLEMS

As a result of intensive studies to achieve the above-described object, the present inventors have surprisingly succeeded in improving further reliability of a display device with respect to manufacturing variations, wavelength variations of light sources, and active variations (variations due to external factors), and have completed the present technology.

That is, as a first aspect, the present technology provides a display device including
at least a light source, a first hologram, and a second hologram, in which
the first hologram compensates for dispersion of light emitted from the light source and diffracts and emits the light,
the second hologram diffracts the light diffracted with compensated dispersion, and emits the light in a direction of an eye of a user, and
the first hologram has an intensity distribution of different diffraction efficiency with respect to a wavelength of the light emitted from the light source depending on a position in a plane of the first hologram.

The display device of the first aspect according to the present technology may further include
a light guide plate, in which
the light diffracted with compensated dispersion that has been emitted from the first hologram may be introduced into the light guide plate, propagated through the light guide plate by total reflection, emitted to outside of the light guide plate, and incident on the second hologram.

The display device of the first aspect according to the present technology may further include
a light intensity detector that detects light intensity of the light emitted from the light source.

The display device of the first aspect according to the present technology may further include
a light spectral sensitivity detector that detects spectral sensitivity of the light emitted from the light source.

The display device of the first aspect according to the present technology may further include
a temperature detector that detects a temperature of the light source.

In the display device of the first aspect according to the present technology,
the first hologram may have an intensity distribution of different diffraction efficiency accompanying a change in wavelength of the light emitted from the light source depending on a position in the plane of the first hologram.

In the display device of the first aspect according to the present technology,
the first hologram may have maximum intensity of different diffraction efficiency with respect to a wavelength of the light emitted from the light source depending on a position in the plane of the first hologram.

In the display device of the first aspect according to the present technology,
the first hologram may have an intensity distribution of different diffraction efficiency accompanying a change in wavelength of the light emitted from the light source depending on a position in the plane of the first hologram, and have maximum intensity of different diffraction efficiency with respect to a wavelength of the light emitted from the light source depending on the position in the plane of the first hologram.

In the display device of the first aspect according to the present technology,
the first hologram may have, in the plane, a first direction and a second direction substantially perpendicular to the first direction,
a start point in the first direction and a start point in the second direction may be the same,
in an area included in the first hologram along the first direction, a region in which a wavelength at which diffraction efficiency becomes maximum intensity changes may be formed, and
in an area included in the first hologram along the second direction, a region in which the maximum intensity of the diffraction efficiency changes may be formed.

In the display device of the first aspect according to the present technology,
the first hologram may have, in the plane, a first direction and a second direction substantially perpendicular to the first direction,
a start point in the first direction and a start point in the second direction may be the same,
in an area included in the first hologram along the first direction, a region in which a wavelength at which diffraction efficiency becomes maximum intensity changes in a long wavelength direction may be formed in order from a side of the start point, and
in an area included in the first hologram along the second direction, a region in which maximum intensity of the diffraction efficiency changes in a direction in which the maximum intensity of the diffraction efficiency is small may be formed in order from the side of the start point.

In the display device of the first aspect according to the present technology,
the first hologram may have, in the plane, a first direction and a second direction substantially perpendicular to the first direction,
a start point in the first direction and a start point in the second direction may be the same,
in an area included in the first hologram along the first direction, a region in which maximum intensity of diffraction efficiency changes may be formed, and
in an area included in the first hologram along the second direction, a region in which the maximum intensity of the diffraction efficiency changes may be formed.

In the display device of the first aspect according to the present technology,
the first hologram may have, in the plane, a first direction and a second direction substantially perpendicular to the first direction,
a start point in the first direction and a start point in the second direction may be the same,
in an area included in the first hologram along the first direction, a region in which a wavelength at which diffraction efficiency becomes maximum intensity changes may be formed, and
in an area included in the first hologram along the second direction, a region in which the wavelength at which the diffraction efficiency becomes the maximum intensity changes may be formed.

In the display device of the first aspect according to the present technology,
the first hologram may have, in the plane, a first direction and a second direction substantially perpendicular to the first direction,
a start point in the first direction and a start point in the second direction may be the same,
in an area included in the first hologram along the first direction, a region in which a wavelength at which diffraction efficiency becomes maximum intensity changes and a region in which maximum intensity of diffraction efficiency changes may be randomly formed, and
in an area included in the first hologram along the second direction, a region in which the wavelength at which the diffraction efficiency becomes the maximum intensity changes and a region in which the maximum intensity of the diffraction efficiency changes may be randomly formed.

In the display device of the first aspect according to the present technology,
the first hologram may have, in the plane, a first direction and a second direction substantially perpendicular to the first direction,
a start point in the first direction and a start point in the second direction may be the same,
in an area included in the first hologram along the first direction, a region in which maximum intensity of diffraction efficiency continuously changes may be formed, and
in an area included in the first hologram along the second direction, a region in which a wavelength at which the diffraction efficiency becomes the maximum intensity continuously changes may be formed.

In the display device of the first aspect according to the present technology,
the first hologram may have, in the plane, a first direction and a second direction substantially perpendicular to the first direction,
a start point in the first direction and a start point in the second direction may be the same,
in an area included in the first hologram along the first direction, a region in which maximum intensity of diffraction efficiency discontinuously changes may be formed, and
in an area included in the first hologram along the second direction, a region in which a wavelength at which the diffraction efficiency becomes the maximum intensity discontinuously changes may be formed.

Furthermore, as a second aspect, the present technology provides a display device including
at least a light source, a first hologram, and a second hologram for each of both eyes of a user, in which
the first hologram compensates for dispersion of light emitted from the light source and diffracts and emits the light,
the second hologram diffracts the light diffracted with compensated dispersion, and emits the light in respective directions of the both eyes of the user, and
the first hologram has an intensity distribution of different diffraction efficiency with respect to a wavelength of the light emitted from the light source depending on a position in a plane of the first hologram.

The display device of the second aspect according to the present technology may further include
a light guide plate for each of both eyes of the user, in which
the light diffracted with compensated dispersion that has been emitted from the first hologram may be introduced into the light guide plate, propagated through the light guide plate by total reflection, emitted to outside of the light guide plate, and incident on the second hologram.

The display device of the second aspect according to the present technology may further include
a light intensity detector that detects light intensity of the light emitted from the light source for each of both eyes of the user.

The display device of the second aspect according to the present technology may further include
a light spectral sensitivity detector that detects spectral sensitivity of the light emitted from the light source for each of both eyes of the user.

The display device of the second aspect according to the present technology may further include
a temperature detector that detects a temperature of the light source for each of both eyes of the user.

In the display device of the second aspect according to the present technology,
the first hologram may have an intensity distribution of different diffraction efficiency accompanying a change in wavelength of the light emitted from the light source depending on a position in the plane of the first hologram.

In the display device of the second aspect according to the present technology,
the first hologram may have maximum intensity of different diffraction efficiency with respect to a wavelength of the light emitted from the light source depending on a position in the plane of the first hologram.

In the display device of the second aspect according to the present technology,
the first hologram may have an intensity distribution of different diffraction efficiency accompanying a change in wavelength of the light emitted from the light source depending on a position in the plane of the first hologram, and have maximum intensity of different diffraction efficiency with respect to a wavelength of the light emitted from the light source depending on the position in the plane of the first hologram.

In the display device of the second aspect according to the present technology,
the first hologram may have, in the plane, a first direction and a second direction substantially perpendicular to the first direction,
a start point in the first direction and a start point in the second direction may be the same,
in an area included in the first hologram along the first direction, a region in which a wavelength at which diffraction efficiency becomes maximum intensity changes may be formed, and
in an area included in the first hologram along the second direction, a region in which the maximum intensity of the diffraction efficiency changes may be formed.

In the display device of the second aspect according to the present technology,
the first hologram may have, in the plane, a first direction and a second direction substantially perpendicular to the first direction,
a start point in the first direction and a start point in the second direction may be the same,
in an area included in the first hologram along the first direction, a region in which a wavelength at which diffraction efficiency becomes maximum intensity changes in a long wavelength direction may be formed in order from a side of the start point, and
in an area included in the first hologram along the second direction, a region in which maximum intensity of the diffraction efficiency changes in a direction in which the maximum intensity of the diffraction efficiency is small may be formed in order from the side of the start point.

In the display device of the second aspect according to the present technology,
the first hologram may have, in the plane, a first direction and a second direction substantially perpendicular to the first direction,
a start point in the first direction and a start point in the second direction may be the same,
in an area included in the first hologram along the first direction, a region in which maximum intensity of diffraction efficiency changes may be formed, and
in an area included in the first hologram along the second direction, a region in which the maximum intensity of the diffraction efficiency changes may be formed.

In the display device of the second aspect according to the present technology,
the first hologram may have, in the plane, a first direction and a second direction substantially perpendicular to the first direction,
a start point in the first direction and a start point in the second direction may be the same,
in an area included in the first hologram along the first direction, a region in which a wavelength at which diffraction efficiency becomes maximum intensity changes may be formed, and
in an area included in the first hologram along the second direction, a region in which the wavelength at which the diffraction efficiency becomes the maximum intensity changes may be formed.

In the display device of the second aspect according to the present technology,
the first hologram may have, in the plane, a first direction and a second direction substantially perpendicular to the first direction,
a start point in the first direction and a start point in the second direction may be the same,
in an area included in the first hologram along the first direction, a region in which a wavelength at which diffraction efficiency becomes maximum intensity changes and a region in which maximum intensity of diffraction efficiency changes may be randomly formed, and
in an area included in the first hologram along the second direction, a region in which the wavelength at which the diffraction efficiency becomes the maximum intensity changes and a region in which the maximum intensity of the diffraction efficiency changes may be randomly formed.

In the display device of the second aspect according to the present technology,
the first hologram may have, in the plane, a first direction and a second direction substantially perpendicular to the first direction,
a start point in the first direction and a start point in the second direction may be the same,
in an area included in the first hologram along the first direction, a region in which maximum intensity of diffraction efficiency continuously changes may be formed, and
in an area included in the first hologram along the second direction, a region in which a wavelength at which the diffraction efficiency becomes the maximum intensity continuously changes may be formed.

In the display device of the second aspect according to the present technology,
the first hologram may have, in the plane, a first direction and a second direction substantially perpendicular to the first direction,
a start point in the first direction and a start point in the second direction may be the same,
in an area included in the first hologram along the first direction, a region in which maximum intensity of diffraction efficiency discontinuously changes may be formed, and
in an area included in the first hologram along the second direction, a region in which a wavelength at which the diffraction efficiency becomes the maximum intensity discontinuously changes may be formed.

According to the present technology, it is possible to further improve the reliability of the display device with respect to manufacturing variations, wavelength variations of light sources, and active variations (variations due to external factors). Note that the effects described here are not necessarily limited, and may be any effect described in the present disclosure.

### BRIEF DESCRIPTION OF DRAWINGS

Fig. 1 is a diagram illustrating a configuration example of a display device of a first embodiment to which the present technology is applied.
Fig. 2 is a diagram for describing diffraction efficiency in a plane of a first hologram (wavelength dispersion compensation hologram) included in the display device of the first embodiment to which the present technology is applied.
Fig. 3 is a diagram illustrating a configuration example of a display device of a second embodiment to which the present technology is applied.
Fig. 4 is a diagram illustrating a configuration example of a display device of a third embodiment to which the present technology is applied.
Fig. 5 is a diagram for describing diffraction efficiency in a plane of the first hologram (wavelength dispersion compensation hologram) included in a display device of a fourth embodiment to which the present technology is applied.
Fig. 6 is a diagram illustrating a configuration example of a display device of a fifth embodiment to which the present technology is applied.

### MODE FOR CARRYING OUT THE INVENTION

Hereinafter, preferred modes for implementing the present technology will be described. An embodiment hereinafter described illustrates an example of a representative embodiment of the present technology, and the scope of the present technology is not narrowed by this. Note that unless otherwise specified, in the drawings, "upper" means an upper direction or an upper side in the drawings, "lower" means a lower direction or a lower side in the drawings, "left" means a left direction or a left side in the drawings, and "right" means a right direction or a right side in the drawings. Furthermore, in the description using the drawings, the same or equivalent elements or members are designated by the same reference signs, and duplicate descriptions will be omitted unless there is a special circumstance.

Note that the description will be made in the following order.
1. Outline of present technology
2. First Embodiment (Example 1 of Display Device)
3. Second Embodiment (Example 2 of Display Device)
4. Third Embodiment (Example 3 of Display Device)
5. Fourth Embodiment (Example 4 of Display Device)
6. Fifth Embodiment (Example 5 of Display Device)

### <1. Outline of Present Technology>

First, an outline of the present technology is described. The present technology relates to a display device.

In the design of a retina direct drawing display, for example, a total of two holograms of a combiner hologram lens in front of the eyes and a single-pitch hologram for each color to compensate for dispersion are used. In practice, since there are manufacturing variations of holograms, wavelength variations of light sources, active variations (variations due to external factors), and the like, luminance variations may occur in each set (for example, in each production lot). In particular, in a case of binocular vision, the luminance for each eye is different, leading to discomfort.

Examples of attempts to solve the above include provision of a dimming function for each individual, enormous selection while viewing a combination of a light source and characteristics of a hologram, and the like. However, even in these cases, it is difficult to fill the performance difference between both eyes.

Furthermore, there is an example of a display device including a hologram for displaying a video and a hologram for suppressing dispersion. In this example, a predetermined half width of each of the two holograms is designed so that luminance in a desired observation range can be sufficiently achieved, and luminance variation due to the observation position of the observer can be suppressed. However, this example does not consider bridging the individual differences in binocular eyewear.

Moreover, there is an example focusing on a diffraction efficiency distribution of a hologram for displaying an image. In this example, the diffraction efficiency distribution is designed such that the central portion of the hologram is high and the peripheral portion of the hologram is low, and thus it is possible to display an image without making a boundary between the virtual image display unit and non-display unit (image display is ineffective) conspicuous. However, this example also does not consider bridging the individual differences in binocular eyewear.

The present technology has been made in view of such a situation. In the present technology, there is provided a first hologram (dispersion compensation hologram) in which an intensity distribution of diffraction efficiency varies with respect to a wavelength depending on a position (location) in a plane of the hologram. Specifically, the present technology provides the first hologram (dispersion compensation hologram) in which the intensity distribution of diffraction efficiency varies (changes) accompanying a wavelength change depending on a position (location) in the plane of the hologram, the first hologram (dispersion compensation hologram) in which maximum intensity of diffraction efficiency with respect to a predetermined wavelength changes depending on a position (location) in the plane of the hologram, and the first hologram (dispersion compensation hologram) in which the intensity distribution of diffraction efficiency changes accompanying a wavelength change depending on a position (location) in the plane of the hologram, and the maximum intensity of diffraction efficiency with respect to the predetermined wavelength changes depending on a position (location) in the plane of the hologram.

Then, according to the present technology, by combining the first hologram (dispersion compensation hologram) and a pair of second holograms (combiner holograms) as targets for dispersion compensation and compensating for dispersion, it is possible to eliminate the dispersion of the diffracted light beam generated by the wavelength distribution of a light source and a luminance difference for each individual, and to reduce discomfort in binocular vision.

The above description is an outline of the present technology. Hereinafter, preferred embodiments for carrying out the present technology will be specifically described in detail with reference to the drawings.

### <2. First Embodiment (Example 1 of Display Device)>

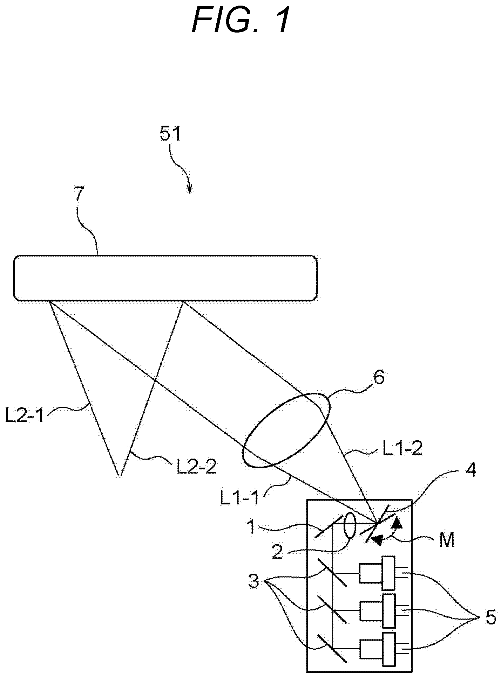

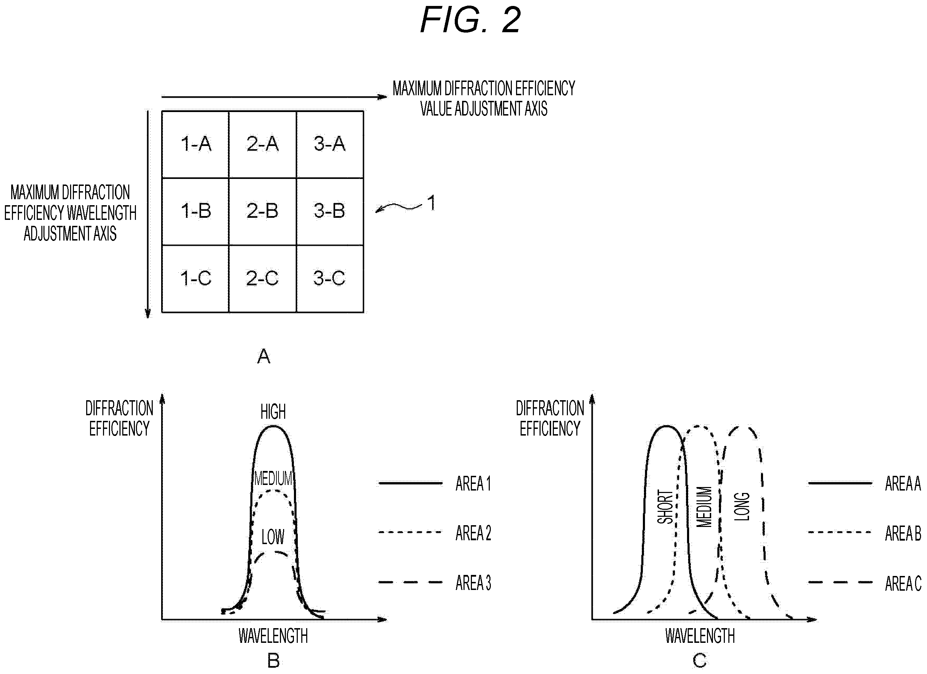

A display device of a first embodiment (Example 1 of the display device) according to the present technology will be described with reference to Figs. 1 and 2.

Fig. 1 is a diagram illustrating a configuration example of the display device of the first embodiment according to the present technology, and specifically, is a diagram illustrating a display device 51.

The display device 51 includes at least a light source 5, a first hologram (dispersion compensation hologram (dispersion compensation HOE)) 1, and a second hologram (combiner hologram (combiner HOE)) 7.

The first hologram (dispersion compensation hologram (dispersion compensation HOE)) 1 compensates for dispersion of light emitted from the light source 5 and reflected by a dichroic mirror 3, and diffracts and emits the light as first diffracted light beams L1-1 and L1-2 via a first collimator lens 2 and a MEMS mirror 4 (moving in the direction of arrow M). The MEMS mirror 4 (also referred to as a scanning mirror) two-dimensionally scans the first diffracted light beams (moves in a direction of arrow M). The first collimator lens 6 collimates the first diffracted light beams L1-1 and L1-2.

The second hologram (combiner hologram (combiner (HOE)) 7 diffracts the light diffracted with compensated dispersion (first diffracted light beams L1-1 and L1-2) and emits the diffracted light as second diffracted light beams L2-1 and L2-2 in the direction of the user's eye.

Fig. 2 is a diagram for describing diffraction efficiency in a plane of the first hologram (dispersion compensation hologram) 1 included in the display device (display device 51) of the first embodiment according to the present technology.

More specifically, Fig. 2A is a diagram illustrating a configuration example of a distribution of diffraction efficiency in a plane of the dispersion compensation hologram 1, in which a vertical axis (vertical direction in Fig. 2A) is an adjustment axis of a maximum diffraction efficiency wavelength, and a horizontal axis (horizontal direction in Fig. 2A) is an adjustment axis of a maximum diffraction efficiency value.

Fig. 2B is an explanatory diagram for adjusting the diffraction efficiency, in which a vertical axis (vertical direction in Fig. 2B) indicates the diffraction efficiency and a horizontal axis (horizontal direction in Fig. 2B) indicates the wavelength. Area 1 (high level of diffraction efficiency) illustrated in Fig. 2B corresponds to area 1-A, area 1-B, and area 1-C illustrated in Fig. 2A, area 2 (medium level of diffraction efficiency) corresponds to area 2-A, area 2-B, and area 2-C illustrated in Fig. 2A, and area 3 (low level of diffraction efficiency) corresponds to area 3-A, area 3-B, and area 2-C illustrated in Fig. 2A.

Fig. 2C is an explanatory diagram for adjusting the wavelength of the maximum diffraction efficiency, in which a vertical axis (vertical direction in Fig. 2C) indicates the diffraction efficiency and a horizontal axis (horizontal direction in Fig. 2C) indicates the wavelength. Area A (short wavelength level) illustrated in Fig. 2C corresponds to area 1-A, area 2-A, and area 3-A illustrated in Fig. 2A, area B (medium wavelength level) corresponds to area 1-B, area 2-B, and area 3-B illustrated in Fig. 2A, and area C (long wavelength level) corresponds to area 1-C, area 2-C, and area 3-C illustrated in Fig. 2A.

In the plane of the dispersion compensation hologram 1, the diffraction efficiency is adjusted by changing the position to which light is applied (incident) depending on the luminance and/or the wavelength of light emitted from the light source 5.

As described above, the content described for the display device of the first embodiment (Example 1 of the display device) according to the present technology can be applied to the display devices of the second to fifth embodiments according to the present technology to be described later as long as there is no particular technical inconsistency.

### <3. Second Embodiment (Example 2 of Display Device)>

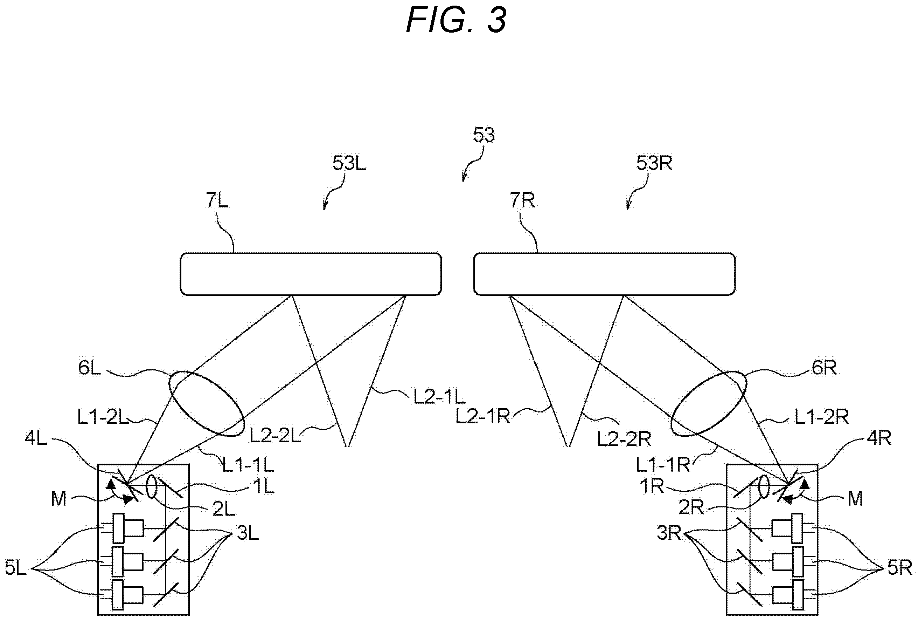

A display device of a second embodiment (Example 2 of the display device) according to the present technology will be described with reference to Fig. 3.

Fig. 3 is a diagram illustrating a configuration example of the display device of the second embodiment according to the present technology, and specifically, is a diagram illustrating a display device 53.

The display device 53 includes a right-eye display device 53R and a left-eye display device 53L.

The display device 53R for the right eye includes at least a light source 5R, a first hologram (dispersion compensation hologram (dispersion compensation HOE)) 1R, and a second hologram (combiner hologram (combiner HOE)) 7R.

The first hologram (dispersion compensation hologram (dispersion compensation (HOE)) 1R compensates for dispersion of light emitted from the light source 5R and reflected by a dichroic mirror 3R, and diffracts and emits the light as first diffracted light beams L1-1R and L1-2R via the first collimator lens 2R and the MEMS mirror 4R. The MEMS mirror 4R (also referred to as a scanning mirror) two-dimensionally scans the first diffracted light beams (moves in the direction of arrow M). The first collimator lens 6R collimates the first diffracted light beams L1-1R and L1-2R.

The second hologram (combiner hologram (combiner (HOE)) 7R diffracts the light diffracted with compensated dispersion (first diffracted light beams L1-1R and L1-2R) and emits the diffracted light as second diffracted light beams L2-1R and L2-2R in the direction of the user's eye.

The display device 53L for the left eye includes at least a light source 5L, a first hologram (dispersion compensation hologram (dispersion compensation HOE)) 1L, and a second hologram (combiner hologram (combiner HOE)) 7L.

The first hologram (dispersion compensation hologram (dispersion compensation (HOE)) 1L compensates for dispersion of light emitted from the light source 5L and reflected by a dichroic mirror 3L, and diffracts and emits the light as first diffracted light beams L1-1L and L1-2L via the first collimator lens 2L and the MEMS mirror 4L. The MEMS mirror 4L (also referred to as a scanning mirror) two-dimensionally scans the first diffracted light beams (moves in the direction of arrow M). The first collimator lens 6L collimates the first diffracted light beams L1-1L and L1-2L.

The second hologram (combiner hologram (combiner (HOE)) 7L diffracts the light diffracted with compensated dispersion (first diffracted light beams L1-1L and L1-2L) and emits the diffracted light as second diffracted light beams L2-1L and L2-2L in the direction of the user's eye.

With the display device 53, it is possible to adjust output light of the second holograms (combiner holograms (combiners (HOE)) 7R and 7L at positions in planes of the first holograms (dispersion compensation holograms (dispersion compensation (HOE)) 1R and 1L to match luminance ratios of both eyes.

The contents described above for the display device of the second embodiment (Example 2 of the display device) according to the present technology can be applied to the display device of the first embodiment according to the present technology described above and the display devices of the third to fifth embodiments according to the present technology described later, unless there is a particular technical contradiction.

### <4. Third Embodiment (Example 3 of Display Device)>

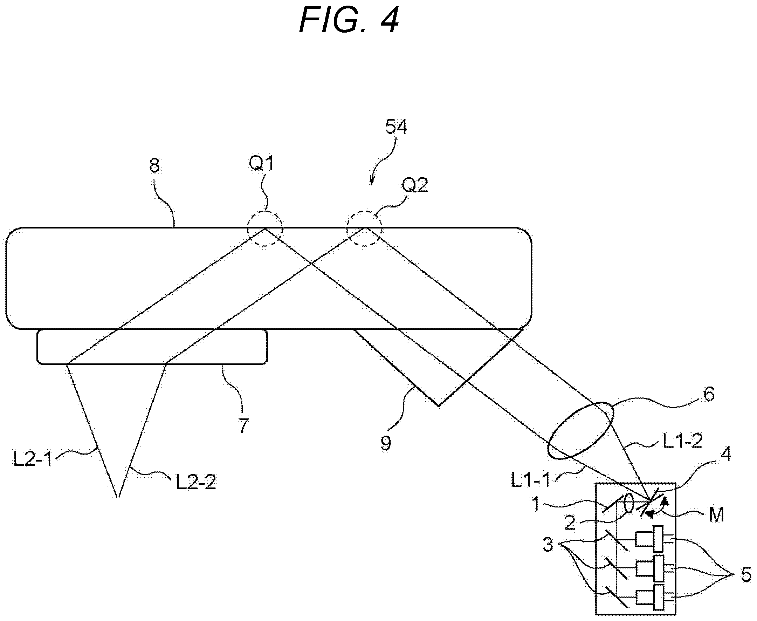

A display device of a third embodiment (Example 3 of the display device) according to the present technology will be described with reference to Fig. 4.

Fig. 4 is a diagram illustrating a configuration example of the display device of the third embodiment according to the present technology, and specifically, is a diagram illustrating a display device 54.

The display device 54 includes at least the light source 5, the first hologram (dispersion compensation hologram) 1, the second hologram (combiner hologram) 7, a light guide plate 8, and a prism 9.

The first hologram (dispersion compensation hologram (dispersion compensation HOE)) 1 compensates for dispersion of light emitted from the light source 5 and reflected by the dichroic mirror 3, and diffracts and emits the light as the first diffracted light beams L1-1 and L1-2 via the first collimator lens 2 and the MEMS mirror 4 (moving in the direction of arrow M). The MEMS mirror 4 (also referred to as a scanning mirror) two-dimensionally scans the first diffracted light beams (moves in the direction of arrow M). The first collimator lens 6 collimates the first diffracted light beams L1-1 and L1-2.

The first diffracted light beams L1-1 and L1-2 are introduced into the light guide plate 8 via the prism 9, propagate in the light guide plate 8 by total reflection (the first diffracted light beam L1-1 is reflected in the region Q1 and the first diffracted light beam L1-2 is reflected in the region Q2), are emitted to the outside of the light guide plate 8, and are incident on the second hologram (combiner hologram) 7.

The second hologram (combiner hologram (combiner (HOE)) 7 diffracts the light diffracted with compensated dispersion (first diffracted light beams L1-1 and L1-2) and emits the diffracted light as the second diffracted light beams L2-1 and L2-2 in the direction of the user's eye.

The contents described above for the display device of the third embodiment (Example 3 of the display device) according to the present technology can be applied to the display devices of the first and second embodiments according to the present technology described above and the display devices of the fourth and fifth embodiments according to the present technology described later, unless there is a particular technical contradiction.

### <5. Fourth Embodiment (Example 4 of Display Device)>

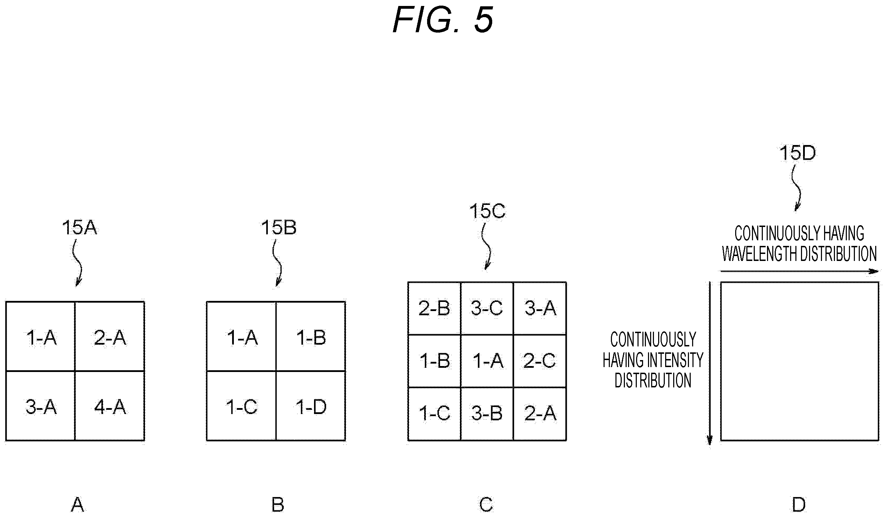

A display device of a fourth embodiment (Example 4 of the display device) according to the present technology will be described with reference to Fig. 5. Fig. 5 is a diagram for describing diffraction efficiency in a plane of a first hologram (dispersion compensation hologram) 15 included in the display device of the fourth embodiment according to the present technology.

More specifically, Fig. 5A is a diagram illustrating a configuration example of a distribution of diffraction efficiency in a plane of a dispersion compensation hologram 15A, Fig. 5B is a diagram illustrating a configuration example of a distribution of diffraction efficiency in a plane of a dispersion compensation hologram 15B, Fig. 5C is a diagram illustrating a configuration example of a distribution of diffraction efficiency in a plane of a dispersion compensation hologram 15C, and Fig. 5D is a diagram illustrating a configuration example of a distribution of diffraction efficiency in a plane of a dispersion compensation hologram 15D.

In the plane of the dispersion compensation hologram 15A illustrated in Fig. 5A, a region in which the maximum intensity of the diffraction efficiency changes is formed.

That is, a vertical axis direction (vertical direction in Fig. 5A) on the left side in the plane of the dispersion compensation hologram 15A is a 1-A region (the above-described area 1 (high intensity) + area A (short wavelength)) and a 3-A region (the above-described area 3 (low intensity) + area A (short wavelength)), and the vertical axis direction (vertical direction in Fig. 5A) on the right side in the plane of the dispersion compensation hologram 15A is a 2-A region (the above-described area 1 (medium intensity) + area A (short wavelength)) and a 4-A region (area 4 (minimum intensity) + area A (short wave length)).

A horizontal axis direction (horizontal direction in Fig. 5A) on the upper side in the plane of the dispersion compensation hologram 15A is the 1-A region (the above-described area 1 (high intensity) + area A (short wavelength)) and the 2-A region (the above-described area 2 (medium intensity) + area A (short wavelength)), and the horizontal axis direction (horizontal direction in Fig. 5A) on the lower side in the plane of the dispersion compensation hologram 15A is a 3-A region (the above-described area 3 (low intensity) + area A (short wavelength)) and the 4-A region (area 4 (minimum intensity) + area A (short wave length)).

In the plane of the dispersion compensation hologram 15B illustrated in Fig. 5B, a region in which the wavelength at which the diffraction efficiency becomes the maximum intensity changes is formed.

That is, the vertical axis direction (vertical direction in Fig. 5B) on the left side in the plane of the dispersion compensation hologram 15B is the 1-A region (the above-described area 1 (high intensity) + area A (short wavelength)) and a 1-C region (the above-described area 1 (high intensity) + area C (long wavelength)), and the vertical axis direction (vertical direction in Fig. 5B) on the right side in the plane of the dispersion compensation hologram 15B is a 1-B region (the above-described area 1 (medium intensity) + area B (medium wavelength) and a 1-D region (area 1 (high intensity) + area D (longest wavelength)).

The horizontal axis direction (horizontal direction in Fig. 5B) on the upper side in the plane of the dispersion compensation hologram 15B is the 1-A region (the above-described area 1 (high intensity) + area A (short wavelength)) and the 1-B region (the above-described area 1 (high intensity) + area B (medium wavelength)), and the horizontal axis direction (horizontal direction in Fig. 5B) on the lower side in the plane of the dispersion compensation hologram 15B is the 1-C region (the above-described area 1 (high intensity) + area C (long wavelength)) and the 1-D region (area 1 (high intensity) + area D (long wavelength)).

In the plane of the dispersion compensation hologram 15C illustrated in Fig. 5C, a region in which the maximum intensity of the diffraction efficiency changes and a region in which the wavelength at which the diffraction efficiency becomes the maximum intensity changes are randomly formed.

That is, the vertical axis direction (vertical direction in Fig. 5C) on the left side in the plane of the dispersion compensation hologram 15C is a 2-B region (the above-described area 2 (medium intensity) + area B (medium wavelength)), the 1-B region (the above-described area 1 (high intensity) + area B (medium wavelength)), and the 1-C region (the above-described area 1 (high intensity) + area C (long wavelength)), the vertical axis direction (vertical direction in Fig. 5C) in the middle in the plane of the dispersion compensation hologram 15B is a 3-C region (the above-described area 3 (low intensity) + area C (long wavelength)), the 1-A region (the above-described area 1 (high intensity) + area A (short wavelength)), and a 3-B region (the above-described area 3 (low intensity) + area B (medium wavelength)), and the vertical axis direction (vertical direction in Fig. 5C) on the right side in the plane of the dispersion compensation hologram 15B is the 3-A region (the above-described area 3 (low intensity) + area A (short wavelength)), a 2-C region (the above-described area 2 (medium intensity) + area C (long wavelength)), and the 2-A region (the above-described area 1 (medium intensity) + area A (short wavelength)).

The horizontal axis direction (the horizontal direction in Fig. 5C) on the upper side in the plane of the dispersion compensation hologram 15C is the 2-B region (the above-described area 2 (medium intensity) + area B (medium wavelength)), the 3-C region (the above-described area 3 (low intensity) + area C (long wavelength)), and the 3-A region (the above-described area 3 (low intensity) + area A (short wavelength)), the horizontal axis direction (horizontal direction in Fig. 5C) at the center in the plane of the dispersion compensation hologram 15C is the 1-B region (the above-described area 1 (high intensity) + area B (medium wavelength)), the 1-A region (the above-described area 1 (high intensity) + area A (short wavelength)), and the 2-C region (the above-described area 2 (medium intensity) + area C (long wavelength)), and the horizontal axis direction (horizontal direction in Fig. 5C) on the lower side in the plane of the dispersion compensation hologram 15C is the 1-C region (the above-described area 1 (high intensity) + area C (long wavelength)), the 3-B region (the above-described area 3 (low intensity) + area B (medium wavelength)), and the 2-A region (the above-described area 1 (medium intensity) + area A (short wavelength)) .

In the plane of the dispersion compensation hologram 15D illustrated in Fig. 5D, a region in which the maximum intensity of the diffraction efficiency continuously changes is formed in an area on the vertical axis (in the vertical direction of Fig. 15D, the intensity distribution is continuous), and a region in which the wavelength at which the diffraction efficiency becomes the maximum intensity continuously changes is formed in an area on the horizontal axis (the wavelength distribution is continuous in the left-right direction in Fig. 15D). Note that, although not illustrated, a region in which the maximum intensity of the diffraction efficiency discontinuously changes may be formed, and a region in which the wavelength at which the diffraction efficiency becomes the maximum intensity discontinuously changes may be formed.

The contents described above for the display device of the fourth embodiment (Example 4 of the display device) according to the present technology can be applied to the display devices of the first to third embodiments according to the present technology described above and the display device of the fifth embodiment according to the present technology described later, unless there is a particular technical contradiction.

### <6. Fifth Embodiment (Example 5 of Display Device)>

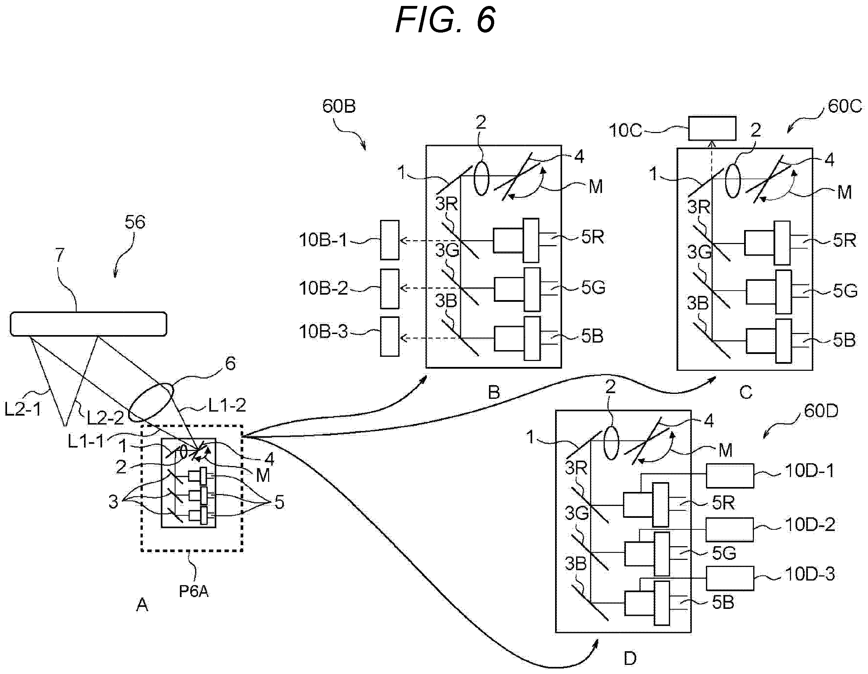

A display device of a fifth embodiment (Example 5 of the display device) according to the present technology will be described with reference to Fig. 6.

Fig. 6 is a diagram illustrating a configuration example of a display device of a fifth embodiment according to the present technology. Specifically, it is a diagram illustrating a display device 56.

More specifically, Fig. 6A is a diagram illustrating the display device 56, Fig. 6B is an enlarged diagram of a region P6A illustrated in Fig. 6A, and is a diagram illustrating a detection mechanism 60B, Fig. 6C is an enlarged diagram of the region P6A illustrated in Fig. 6A, and is a diagram illustrating a detection mechanism 60C, and Fig. 6D is an enlarged diagram of the region P6A illustrated in Fig. 6A, and is a diagram illustrating a detection mechanism 60D.

The display device 56 includes at least the light source 5, the first hologram (dispersion compensation hologram) 1, and the second hologram (combiner hologram) 7.

The first hologram (dispersion compensation hologram (dispersion compensation HOE)) 1 compensates for dispersion of light emitted from the light source 5 and reflected by the dichroic mirror 3, and diffracts and emits the light as the first diffracted light beams L1-1 and L1-2 via the first collimator lens 2 and the MEMS mirror 4 (moving in the direction of arrow M). The MEMS mirror 4 (also referred to as a scanning mirror) two-dimensionally scans the first diffracted light beams (moves in the direction of arrow M). The first collimator lens 6 collimates the first diffracted light beams L1-1 and L1-2.

The second hologram (combiner hologram (combiner (HOE)) 7 diffracts the light diffracted with compensated dispersion (first diffracted light beams L1-1 and L1-2) and emits the diffracted light as the second diffracted light beams L2-1 and L2-2 in the direction of the user's eye.

In the detection mechanism 60B, the light (for example, red light) emitted from the light source 5R passes through the dichroic mirror 3R and enters a light intensity detector 10B-1, light (for example, green light) emitted from a light source 5G passes through a dichroic mirror 3G and enters a light intensity detector 10B-2, light (for example, blue light) emitted from a light source 5B passes through a dichroic mirror 3B and enters a light intensity detector 10B-3, and intensity fluctuations of the light (for example, red light) emitted from the light source 5R, the light (for example, green light) emitted from the light source 5G, and the light (for example, blue light) emitted from the light source 5B can be detected. The detection of this intensity variation makes it possible to actively move and adjust the dispersion compensation.

In the detection mechanism 60C, the light (for example, red light) emitted from the light source 5R is reflected by the dichroic mirror 3R and incident on the first hologram (dispersion compensation hologram) 1, and incident on a light spectral sensitivity detector 10C, the light (for example, green light) emitted from the light source 5G is reflected by the dichroic mirror 3G and incident on the first hologram (dispersion compensation hologram) 1, and incident on the light spectral sensitivity detector 10C, and the light (for example, blue light) emitted from the light source 5B is reflected by the dichroic mirror 3B and incident on the first hologram (dispersion compensation hologram) 1, and incident on the light spectral sensitivity detector 10C, so that it is possible to detect a variation in light spectral sensitivity (light spectral intensity). By detecting the variation in the light spectral sensitivity (light spectral intensity), the dispersion compensation can be actively moved and adjusted.

In the detection mechanism 60D, a temperature detector 10D-1 is connected to the light source 5R, a temperature detector 10D-2 is connected to the light source 5G, a temperature detector 10D-3 is connected to the light source 5B, and temperature fluctuations of the light source 5R, the light source 5G, and the light source 5B can be detected. The detection of this temperature variation makes it possible to actively move and adjust the dispersion compensation.

The contents described above for the display device of the fifth embodiment (Example 5 of the display device) according to the present technology can be applied to the display devices of the first to fourth embodiments according to the present technology described above unless there is a particular technical contradiction.

Note that the embodiments according to the present technology are not limited to the above-described embodiments, and various modifications can be made without departing from the gist of the present technology.

Furthermore, effects described in the present specification are merely examples and are not limited, and there may be other effects.

Furthermore, the present technology can also have the following configurations.
[1] A display device, including:
   at least a light source, a first hologram, and a second hologram, in which
   the first hologram compensates for dispersion of light emitted from the light source and diffracts and emits the light,
   the second hologram diffracts the light diffracted with compensated dispersion, and emits the light in a direction of an eye of a user, and
   the first hologram has an intensity distribution of different diffraction efficiency with respect to a wavelength of the light emitted from the light source depending on a position in a plane of the first hologram.
[2] The display device according to [1], further including:
   a light guide plate, in which
   the light diffracted with compensated dispersion that has been emitted from the first hologram is introduced into the light guide plate, propagated through the light guide plate by total reflection, emitted to outside of the light guide plate, and incident on the second hologram.
[3] The display device according to [1] or [2], further including a light intensity detector that detects light intensity of the light emitted from the light source.
[4] The display device according to any one of [1] to [3], further including a light spectral sensitivity detector that detects spectral sensitivity of the light emitted from the light source.
[5] The display device according to any one of [1] to [4], further including a temperature detector that detects a temperature of the light source.
[6] The display device according to any one of [1] to [5], in which the first hologram has an intensity distribution of different diffraction efficiency accompanying a change in wavelength of the light emitted from the light source depending on a position in the plane of the first hologram.
[7] The display device according to any one of [1] to [5], in which the first hologram has maximum intensity of different diffraction efficiency with respect to a wavelength of the light emitted from the light source depending on a position in the plane of the first hologram.
[8] The display device according to any one of [1] to [5], in which the first hologram has an intensity distribution of different diffraction efficiency accompanying a change in wavelength of the light emitted from the light source depending on a position in the plane of the first hologram, and has maximum intensity of different diffraction efficiency with respect to a wavelength of the light emitted from the light source depending on the position in the plane of the first hologram.
[9] The display device according to any one of [1] to [5], in which
   the first hologram has, in the plane, a first direction and a second direction substantially perpendicular to the first direction,
   a start point in the first direction and a start point in the second direction are the same,
   in an area included in the first hologram along the first direction, a region in which a wavelength at which diffraction efficiency becomes maximum intensity changes is formed, and
   in an area included in the first hologram along the second direction, a region in which the maximum intensity of the diffraction efficiency changes is formed.
[10] The display device according to any one of [1] to [5], in which
   the first hologram has, in the plane, a first direction and a second direction substantially perpendicular to the first direction,
   a start point in the first direction and a start point in the second direction are the same,
   in an area included in the first hologram along the first direction, a region in which a wavelength at which diffraction efficiency becomes maximum intensity changes in a long wavelength direction is formed in order from a side of the start point, and
   in an area included in the first hologram along the second direction, a region in which maximum intensity of the diffraction efficiency changes in a direction in which the maximum intensity of the diffraction efficiency is small is formed in order from the side of the start point.
[11] The display device according to any one of [1] to [5], in which
   the first hologram has, in the plane, a first direction and a second direction substantially perpendicular to the first direction,
   a start point in the first direction and a start point in the second direction are the same,
   in an area included in the first hologram along the first direction, a region in which maximum intensity of diffraction efficiency changes is formed, and
   in an area included in the first hologram along the second direction, a region in which the maximum intensity of the diffraction efficiency changes is formed.
[12] The display device according to any one of [1] to [5], in which
   the first hologram has, in the plane, a first direction and a second direction substantially perpendicular to the first direction,
   a start point in the first direction and a start point in the second direction are the same,
   in an area included in the first hologram along the first direction, a region in which a wavelength at which diffraction efficiency becomes maximum intensity changes is formed, and
   in an area included in the first hologram along the second direction, a region in which the wavelength at which the diffraction efficiency becomes the maximum intensity changes is formed.
[13] The display device according to any one of [1] to [5], in which
   the first hologram has, in the plane, a first direction and a second direction substantially perpendicular to the first direction,
   a start point in the first direction and a start point in the second direction are the same,
   in an area included in the first hologram along the first direction, a region in which a wavelength at which diffraction efficiency becomes maximum intensity changes and a region in which maximum intensity of diffraction efficiency changes are randomly formed, and
   in an area included in the first hologram along the second direction, a region in which the wavelength at which the diffraction efficiency becomes the maximum intensity changes and a region in which the maximum intensity of the diffraction efficiency changes are randomly formed.
[14] The display device according to any one of [1] to [5], in which
   the first hologram has, in the plane, a first direction and a second direction substantially perpendicular to the first direction,
   a start point in the first direction and a start point in the second direction are the same,
   in an area included in the first hologram along the first direction, a region in which maximum intensity of diffraction efficiency continuously changes is formed, and
   in an area included in the first hologram along the second direction, a region in which a wavelength at which the diffraction efficiency becomes the maximum intensity continuously changes is formed.
[15] The display device according to any one of [1] to [5], in which
   the first hologram has, in the plane, a first direction and a second direction substantially perpendicular to the first direction,
   a start point in the first direction and a start point in the second direction are the same,
   in an area included in the first hologram along the first direction, a region in which maximum intensity of diffraction efficiency discontinuously changes is formed, and
   in an area included in the first hologram along the second direction, a region in which a wavelength at which the diffraction efficiency becomes the maximum intensity discontinuously changes is formed.
[16] A display device, including:
   at least a light source, a first hologram, and a second hologram for each of both eyes of a user, in which
   the first hologram compensates for dispersion of light emitted from the light source and diffracts and emits the light,
   the second hologram diffracts the light diffracted with compensated dispersion, and emits the light in respective directions of the both eyes of the user, and
   the first hologram has an intensity distribution of different diffraction efficiency with respect to a wavelength of the light emitted from the light source depending on a position in a plane of the first hologram.
[17] The display device according to [16], further including:
   a light guide plate for each of both eyes of the user, in which
   the light diffracted with compensated dispersion that has been emitted from the first hologram is introduced into the light guide plate, propagated through the light guide plate by total reflection, emitted to outside of the light guide plate, and incident on the second hologram.
[18] The display device according to [16] or [17], further including a light intensity detector that detects light intensity of the light emitted from the light source for each of both eyes of the user.
[19] The display device according to any one of [16] to [18], further including a light spectral sensitivity detector that detects spectral sensitivity of the light emitted from the light source for each of both eyes of the user.
[20] The display device according to any one of [16] to [19], further including a temperature detector that detects a temperature of the light source for each of both eyes of the user.
[21] The display device according to any one of [16] to [20], in which the first hologram has an intensity distribution of different diffraction efficiency accompanying a change in wavelength of the light emitted from the light source depending on a position in the plane of the first hologram.
[22] The display device according to any one of [16] to [20], in which the first hologram has maximum intensity of different diffraction efficiency with respect to a wavelength of the light emitted from the light source depending on a position in the plane of the first hologram.
[23] The display device according to any one of [16] to [20], in which the first hologram has an intensity distribution of different diffraction efficiency accompanying a change in wavelength of the light emitted from the light source depending on a position in the plane of the first hologram, and has maximum intensity of different diffraction efficiency with respect to a wavelength of the light emitted from the light source depending on the position in the plane of the first hologram.
[24] The display device according to any one of [16] to [20], in which
   the first hologram has, in the plane, a first direction and a second direction substantially perpendicular to the first direction,
   a start point in the first direction and a start point in the second direction are the same,
   in an area included in the first hologram along the first direction, a region in which a wavelength at which diffraction efficiency becomes maximum intensity changes is formed, and
   in an area included in the first hologram along the second direction, a region in which the maximum intensity of the diffraction efficiency changes is formed.
[25] The display device according to any one of [16] to [20], in which
   the first hologram has, in the plane, a first direction and a second direction substantially perpendicular to the first direction,
   a start point in the first direction and a start point in the second direction are the same,
   in an area included in the first hologram along the first direction, a region in which a wavelength at which diffraction efficiency becomes maximum intensity changes in a long wavelength direction is formed in order from a side of the start point, and
   in an area included in the first hologram along the second direction, a region in which maximum intensity of the diffraction efficiency changes in a direction in which the maximum intensity of the diffraction efficiency is small is formed in order from the side of the start point.
[26] The display device according to any one of [16] to [20], in which
   the first hologram has, in the plane, a first direction and a second direction substantially perpendicular to the first direction,
   a start point in the first direction and a start point in the second direction are the same,
   in an area included in the first hologram along the first direction, a region in which maximum intensity of diffraction efficiency changes is formed, and
   in an area included in the first hologram along the second direction, a region in which the maximum intensity of the diffraction efficiency changes is formed.
[27] The display device according to any one of [16] to [20], in which
   the first hologram has, in the plane, a first direction and a second direction substantially perpendicular to the first direction,
   a start point in the first direction and a start point in the second direction are the same,
   in an area included in the first hologram along the first direction, a region in which a wavelength at which diffraction efficiency becomes maximum intensity changes is formed, and
   in an area included in the first hologram along the second direction, a region in which the wavelength at which the diffraction efficiency becomes the maximum intensity changes is formed.
[28] The display device according to any one of [16] to [20], in which
   the first hologram has, in the plane, a first direction and a second direction substantially perpendicular to the first direction,
   a start point in the first direction and a start point in the second direction are the same,
   in an area included in the first hologram along the first direction, a region in which a wavelength at which diffraction efficiency becomes maximum intensity changes and a region in which maximum intensity of diffraction efficiency changes are randomly formed, and
   in an area included in the first hologram along the second direction, a region in which the wavelength at which the diffraction efficiency becomes the maximum intensity changes and a region in which the maximum intensity of the diffraction efficiency changes are randomly formed.
[29] The display device according to any one of [16] to [20], in which
   the first hologram has, in the plane, a first direction and a second direction substantially perpendicular to the first direction,
   a start point in the first direction and a start point in the second direction are the same,
   in an area included in the first hologram along the first direction, a region in which maximum intensity of diffraction efficiency continuously changes is formed, and
   in an area included in the first hologram along the second direction, a region in which a wavelength at which the diffraction efficiency becomes the maximum intensity continuously changes is formed.
[30] The display device according to any one of [16] to [20], in which
   the first hologram has, in the plane, a first direction and a second direction substantially perpendicular to the first direction,
   a start point in the first direction and a start point in the second direction are the same,
   in an area included in the first hologram along the first direction, a region in which maximum intensity of diffraction efficiency discontinuously changes is formed, and
   in an area included in the first hologram along the second direction, a region in which a wavelength at which the diffraction efficiency becomes the maximum intensity discontinuously changes is formed.

### REFERENCE SIGNS LIST

1 First hologram (dispersion compensation hologram)
2, 2L, 2R First collimator lens
3, 3L, 3R Dichroic mirror
4, 4L, 4R MEMS mirror
5, 5L, 5R Light source
6, 6L, 6R Second collimator lens
7, 7L, 7R Second hologram (combiner hologram)
8 Light guide plate
9 Prism
51, 53(53L, 53R), 54, 56 Display device

## Claims

1. A display device, comprising:
at least a light source, a first hologram, and a second hologram, wherein
the first hologram compensates for dispersion of light emitted from the light source and diffracts and emits the light,
the second hologram diffracts the light diffracted with compensated dispersion, and emits the light in a direction of an eye of a user, and
the first hologram has an intensity distribution of different diffraction efficiency with respect to a wavelength of the light emitted from the light source depending on a position in a plane of the first hologram.

2. The display device according to claim 1, further comprising:
a light guide plate, wherein
the light diffracted with compensated dispersion that has been emitted from the first hologram is introduced into the light guide plate, propagated through the light guide plate by total reflection, emitted to outside of the light guide plate, and incident on the second hologram.

3. The display device according to claim 1, further comprising a light intensity detector that detects light intensity of the light emitted from the light source.

4. The display device according to claim 1, further comprising a light spectral sensitivity detector that detects spectral sensitivity of the light emitted from the light source.

5. The display device according to claim 1, further comprising a temperature detector that detects a temperature of the light source.

6. The display device according to claim 1, wherein the first hologram has an intensity distribution of different diffraction efficiency accompanying a change in wavelength of the light emitted from the light source depending on a position in the plane of the first hologram.

7. The display device according to claim 1, wherein the first hologram has maximum intensity of different diffraction efficiency with respect to a wavelength of the light emitted from the light source depending on a position in the plane of the first hologram.

8. The display device according to claim 1, wherein the first hologram has an intensity distribution of different diffraction efficiency accompanying a change in wavelength of the light emitted from the light source depending on a position in the plane of the first hologram, and has maximum intensity of different diffraction efficiency with respect to a wavelength of the light emitted from the light source depending on the position in the plane of the first hologram.

9. The display device according to claim 1, wherein
the first hologram has, in the plane, a first direction and a second direction substantially perpendicular to the first direction,
a start point in the first direction and a start point in the second direction are same,
in an area included in the first hologram along the first direction, a region in which a wavelength at which diffraction efficiency becomes maximum intensity changes is formed, and
in an area included in the first hologram along the second direction, a region in which the maximum intensity of the diffraction efficiency changes is formed.

10. The display device according to claim 1, wherein
the first hologram has, in the plane, a first direction and a second direction substantially perpendicular to the first direction,
a start point in the first direction and a start point in the second direction are same,
in an area included in the first hologram along the first direction, a region in which a wavelength at which diffraction efficiency becomes maximum intensity changes in a long wavelength direction is formed in order from a side of the start point, and
in an area included in the first hologram along the second direction, a region in which maximum intensity of the diffraction efficiency changes in a direction in which the maximum intensity of the diffraction efficiency is small is formed in order from the side of the start point.

11. The display device according to claim 1, wherein
the first hologram has, in the plane, a first direction and a second direction substantially perpendicular to the first direction,
a start point in the first direction and a start point in the second direction are same,
in an area included in the first hologram along the first direction, a region in which maximum intensity of diffraction efficiency changes is formed, and
in an area included in the first hologram along the second direction, a region in which the maximum intensity of the diffraction efficiency changes is formed.

12. The display device according to claim 1, wherein
the first hologram has, in the plane, a first direction and a second direction substantially perpendicular to the first direction,
a start point in the first direction and a start point in the second direction are same,
in an area included in the first hologram along the first direction, a region in which a wavelength at which diffraction efficiency becomes maximum intensity changes is formed, and
in an area included in the first hologram along the second direction, a region in which the wavelength at which the diffraction efficiency becomes the maximum intensity changes is formed.

13. The display device according to claim 1, wherein
the first hologram has, in the plane, a first direction and a second direction substantially perpendicular to the first direction,
a start point in the first direction and a start point in the second direction are same,
in an area included in the first hologram along the first direction, a region in which a wavelength at which diffraction efficiency becomes maximum intensity changes and a region in which maximum intensity of diffraction efficiency changes are randomly formed, and
in an area included in the first hologram along the second direction, a region in which the wavelength at which the diffraction efficiency becomes the maximum intensity changes and a region in which the maximum intensity of the diffraction efficiency changes are randomly formed.

14. The display device according to claim 1, wherein
the first hologram has, in the plane, a first direction and a second direction substantially perpendicular to the first direction,
a start point in the first direction and a start point in the second direction are same,
in an area included in the first hologram along the first direction, a region in which maximum intensity of diffraction efficiency continuously changes is formed, and
in an area included in the first hologram along the second direction, a region in which a wavelength at which the diffraction efficiency becomes the maximum intensity continuously changes is formed.

15. The display device according to claim 1, wherein
the first hologram has, in the plane, a first direction and a second direction substantially perpendicular to the first direction,
a start point in the first direction and a start point in the second direction are same,
in an area included in the first hologram along the first direction, a region in which maximum intensity of diffraction efficiency discontinuously changes is formed, and
in an area included in the first hologram along the second direction, a region in which a wavelength at which the diffraction efficiency becomes the maximum intensity discontinuously changes is formed.

16. A display device, comprising:
at least a light source, a first hologram, and a second hologram for each of both eyes of a user, wherein
the first hologram compensates for dispersion of light emitted from the light source and diffracts and emits the light,
the second hologram diffracts the light diffracted with compensated dispersion, and emits the light in respective directions of the both eyes of the user, and
the first hologram has an intensity distribution of different diffraction efficiency with respect to a wavelength of the light emitted from the light source depending on a position in a plane of the first hologram.
